(19) Europäisches Patentamt / European Patent Office / Office européen des brevets

(11) **EP 3 252 560 B1**

(12) **FASCICULE DE BREVET EUROPEEN**

(45) Date de publication et mention de la délivrance du brevet:
**30.01.2019 Bulletin 2019/05**

(51) Int Cl.:
*G05D 1/08* *(2006.01)*    *B64C 27/22* *(2006.01)*

(21) Numéro de dépôt: **17175676.0**

(22) Date de dépôt: **26.10.2012**

(54) **PROCEDE DE PILOTAGE ASSISTE D'UN AERONEF A VOILURE TOURNANTE COMPRENANT AU MOINS UNE HELICE PROPULSIVE, DISPOSITIF DE PILOTAGE ASSISTE ET AERONEF**

HILFSSTEUERUNGSVERFAHREN EINES DREHFLÜGELFLUGZEUGS, DAS MINDESTENS EINE DRUCKSCHRAUBE UMFASST, HILFSSTEUERUNGSVORRICHTUNG UND LUFTFAHRZEUG

METHOD OF ASSISTED PILOTING OF A ROTARY WING AIRCRAFT HAVING AT LEAST ONE PROPULSION PROPELLER, AN ASSISTED PILOTING DEVICE, AND AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2011 FR 1103561**

(43) Date de publication de la demande:
**06.12.2017 Bulletin 2017/49**

(60) Demande divisionnaire:
**17204131.1 / 3 309 642**

(62) Numéro(s) de document de la (des) demande(s) initiale(s) en application de l'article 76 CBE:
**12007385.3 / 2 597 035**

(73) Titulaire: **Airbus Helicopters
13725 Marignane Cedex (FR)**

(72) Inventeurs:
• **SALESSE-LAVERGNE, Marc
13190 Allauch (FR)**
• **QUEIRAS, Nicolas
13170 Les Pennes Mirabeau (FR)**
• **EGLIN, Paul
13830 Roquefort La Bédoule (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**US-A1- 2008 237 392**

EP 3 252 560 B1

**Description**

La présente invention concerne un procédé de pilotage assisté d'un aéronef à voilure tournante comprenant au moins une hélice propulsive, un dispositif de pilotage assisté et un aéronef.

Parmi les aéronefs, on connaît notamment les giravions pourvus d'une voilure tournante. De plus, certains giravions sont en outre munis d'un groupe propulsif additionnel.

Un aéronef à voilure tournante muni d'un groupe propulsif additionnel, ce groupe propulsif ayant au moins une hélice propulsive, est dénommé « aéronef hybride » par commodité par la suite.

Cet aéronef hybride peut comprendre :

- un moyen de commande de la poussée générée par le groupe propulsif,

- un moyen de commande collective du pas collectif des pales de la voilure tournante, et

- un moyen de commande cyclique du pas cyclique des pales de la voilure tournante.

Dès lors, on constate que les commandes de vol sont redondées.

En effet, pour contrôler l'accélération longitudinale de l'aéronef hybride, un pilote peut utiliser le moyen de commande de la poussée, et/ ou à l'instar d'un hélicoptère classique le moyen de commande cyclique.

De même, pour contrôler l'accélération verticale de l'aéronef hybride afin de contrôler la montée ou la descente de l'aéronef hybride, un pilote peut utiliser à l'instar d'un hélicoptère classique le moyen de commande collective sans changer l'assiette de l'aéronef hybride, et/ou peut par exemple d'une part changer l'assiette longitudinale de l'aéronef à l'aide du moyen de commande cyclique et d'autre part utiliser le moyen de commande de la poussée.

On comprend qu'une multitude de combinaisons de commande sont envisageables pour piloter un aéronef hybride.

Il peut donc être utile de prévoir un procédé et un dispositif allégeant la charge de travail du pilote en l'aidant lors de manoeuvres réalisées en pilotant la voilure tournante et le groupe propulsif.

On note que l'état de la technique inclut le document US 2008/0237392 présentant un aéronef pourvu d'une voilure tournante, d'une aile fixe et d'une hélice propulsive.

Un système de contrôle de l'aéronef permet à une personne de sélectionner un biais de contrôle pour atteindre un objectif opérationnel.

Plus précisément, l'aéronef comprend un module de contrôle vertical et longitudinal de l'aéronef recevant des données d'entrée relatives à des commandes de changement d'un angle de tangage et d'une vitesse verticale.

Ces données d'entrée sont filtrées puis subissent un traitement avant d'être transmises à un module d'inversion, le module d'inversion déterminant les changements à apporter à des moyens de commande de l'aéronef.

La présente invention a alors pour objet de proposer un procédé alternatif de pilotage assisté d'un aéronef hybride pour alléger la charge de travail d'un pilote de cet aéronef hybride.

L'invention vise un procédé de pilotage assisté d'un aéronef muni d'une voilure tournante et d'un groupe propulsif comprenant au moins une hélice propulsive, chaque hélice comprenant une pluralité de premières pales, la voilure tournante comprenant au moins un rotor muni d'une pluralité de deuxièmes pales.

Selon ce procédé, on traduit un ordre du pilote de l'aéronef donné pour requérir un déplacement selon une direction en une consigne d'accélération selon cette direction, puis on transforme cette consigne d'accélération par des lois prédéterminées en :

- au moins une consigne de tenue d'assiette longitudinale transmise à un premier système automatique de tenue d'assiette longitudinale contrôlant un pas cyclique longitudinal des deuxièmes pales de la voilure tournante pour respecter ladite consigne de tenue d'assiette longitudinale, et

- une première consigne de tenue de facteur de charge dans une direction longitudinale de l'aéronef parallèle à un axe de roulis de l'aéronef transmise à un deuxième système automatique de tenue dudit facteur de charge contrôlant un pas collectif des premières pales du groupe propulsif pour respecter ladite première consigne.

Dès lors des boucles de régulation utilisent la consigne de tenue d'assiette longitudinale et la première consigne pour le contrôle de l'aéronef.

Il est à noter que l'on entend par « assiette longitudinale » l'angle de tangage de l'aéronef.

Par suite, le pilote peut se contenter de fournir un ordre pour requérir le déplacement de l'aéronef selon une direction longitudinale ou verticale, le procédé permettant le contrôle automatique de l'aéronef en conséquence.

La charge de travail du pilote est alors allégée.

Il est à noter que l'on entend par direction longitudinale une direction parallèle à la direction longitudinale selon laquelle s'étend l'aéronef et assimilable à l'axe de roulis de l'aéronef, et par direction verticale une direction parallèle à la pesanteur.

Lorsque l'ordre est un ordre de déplacement selon une direction longitudinale parallèle à un axe de roulis de l'aéronef, on traduit cet ordre de déplacement selon une direction longitudinale en une consigne d'accélération longitudinale, puis on transforme cette consigne d'accélération longitudinale par des lois prédéterminés uniquement en une consigne de tenue d'assiette longitudinale transmise à un premier système automatique de tenue d'assiette longitudinale contrôlant un pas cyclique longitudinale des deuxièmes pales et en une première consigne de tenue de facteur de charge transmise à un deuxième système automatique de tenue de facteur de charge contrôlant un pas collectif des premières pales.

La consigne de tenue d'assiette longitudinale peut être déterminée par la première loi de contrôle longitudinal suivante :

$$\theta^* = (180/Pi)\bullet[(-a)\bullet(\gamma_x^*/g) - k]/(a+b)$$

où « $\theta^*$ » représente la consigne de tenue d'assiette longitudinale exprimée en degrés, « Pi » représente le nombre $\pi$, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale,

Par ailleurs, la première consigne de tenue de facteur de charge est déterminée par la deuxième loi de contrôle longitudinal suivante :

$$Nx^* = [b\bullet(\gamma_x^*/g) - k]/(a+b)$$

où « $Nx^*$ » représente la première consigne de tenue de facteur de charge, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On note que la première consigne de tenue d'assiette longitudinale peut être modifiée par incrémentation ou décrémentation par un organe de réglage d'assiette, l'organe de réglage d'assiette pouvant être un organe de commande impulsionnelle monté sur une poignée de commande cyclique de l'aéronef.

La troisième constante longitudinale est égale à zéro pour annuler ladite première consigne de tenue de facteur de charge lorsque le pilote ne donne pas un ordre de déplacement selon une direction longitudinale, la consigne d'accélération longitudinale étant nulle.

Lors des manoeuvres à cabrer, ou lors des changements de références d'assiettes longitudinales par l'organe de réglage d'assiette, le deuxième système automatique de tenue du facteur de charge agit sur une chaîne de commande pour abaisser le pas collectif des premières pales. La puissance consommée par les hélices reste alors quasi constante, alors que la vitesse longitudinale de l'aéronef diminue à cause de la manoeuvre.

Lors des manoeuvres à piquer, le deuxième système automatique de tenue du facteur de charge agit sur une chaîne de commande pour augmenter le pas collectif des premières pales. La puissance consommée par les hélices reste alors quasi constante, alors que la vitesse longitudinale de l'aéronef augmente à cause de la manoeuvre.

Cette configuration présente ainsi l'avantage de gérer la puissance des hélices pendant les phases de manoeuvre.

Selon une variante, lorsque le pilote ne donne pas un ordre de déplacement selon la direction longitudinale, le pilote peut choisir de passer dans un mode de tenue de vitesse où la première consigne de facteur de charge est égale au sinus de l'assiette longitudinale courante, la consigne d'accélération longitudinale étant nulle.

Dans ce cas, lors des manoeuvres à cabrer de l'appareil, le deuxième système automatique de tenue du facteur de charge agit sur une chaîne de commande afin d'augmenter le pas collectif des premières pales pour maintenir la vitesse longitudinale de l'aéronef quasi constante.

A l'inverse, lors des manoeuvres à piquer, lorsque le pilote agit sur le manche cyclique le deuxième système automatique de tenue du facteur de charge agit sur une chaîne de commande afin d'abaisser le pas collectif des premières pales pour contrer l'augmentation de vitesse liée à la manoeuvre.

Cette variante présente ainsi l'avantage de gérer la vitesse de l'appareil durant les manoeuvres. Elle peut être une alternative à une tenue de vitesse réalisé par le pas collectif des hélices du groupe propulsif.

Il est aisé de rajouter une deuxième boucle de régulation sur le pas collectif des premières pales avec le paramètre de vitesse air indiquée IAS pour davantage de robustesse.

Selon une variante, il est avantageux d'utiliser la troisième constante longitudinale comme une consigne d'assiette d'équilibre « idéale » afin de faciliter le pilotage de l'aéronef. Le constructeur détermine ainsi une assiette d'équilibre « $\theta_{equi}$ » qui optimise les performances de l'aéronef dans des phases de vol stabilisées prédéterminées lorsque la consigne d'accélération longitudinale est nulle.

Pour conserver la vitesse de l'aéronef lors de la rejointe d'un point d'équilibre, la troisième constante longitudinale « k » est alors déterminé par la formule suivante :

$$k = -\sin(\theta_{equi}) \bullet (a+b),$$

où « • » représente le signe de la multiplication, « a » représente ladite première constante longitudinale, « b » représente ladite deuxième constante longitudinale, « $\theta_{equi}$ » représente une assiette d'équilibre prédéterminée optimisant des performances de l'aéronef dans des phases de vol stabilisées prédéterminées, la consigne d'accélération longitudinale $\gamma_x^*$ étant nulle.

Ainsi, en phase stabilisée l'assiette d'équilibre sera automatiquement gérée et prise comme référence par la stabilisation de base du pilote automatique. Dans cette même phase, la première consigne de tenue de facteur de charge Nx* correspond au terme « $\sin(\theta_{equi})$ » ce qui permet de conserver la vitesse de l'appareil lors de la rejointe du point d'équilibre.

Il est à noter que le dispositif mettant en oeuvre ce procédé peut comprendre un moyen de sélection manoeuvrable par le pilote pour choisir l'application de la première variante, de la deuxième variante ou de la troisième variante.

Eventuellement, les constantes longitudinales sont choisies dans une liste incluant au moins une des combinaisons suivantes :

- une première combinaison longitudinale selon laquelle la première constante longitudinale vaut « 1 », la deuxième constante longitudinale vaut zéro, et la troisième constante longitudinale vaut zéro,

- une deuxième combinaison longitudinale selon laquelle la première constante longitudinale vaut « 0,001 », la deuxième constante longitudinale vaut « 1 », et la troisième constante longitudinale vaut zéro,

- une troisième combinaison longitudinale selon laquelle la première constante longitudinale vaut « 0,9 », la deuxième constante longitudinale vaut « 2 », et la troisième constante longitudinale vaut zéro.

Avantageusement, la première combinaison longitudinale est appliquée à basse vitesse longitudinale soit en dessous de 70 noeuds (kts). Selon cette première combinaison longitudinale, on commande principalement l'aéronef en modifiant l'assiette longitudinale de l'aéronef.

La deuxième combinaison longitudinale est éventuellement appliquée à haute vitesse longitudinale soit au dessus de 150 noeuds. Selon cette deuxième combinaison longitudinale, on commande principalement l'aéronef à l'aide du pas collectif des premières pales des hélices pour optimiser la traînée aérodynamique de l'aéronef.

La troisième combinaison longitudinale est éventuellement appliquée à moyenne vitesse longitudinale soit entre 70 noeuds et 150 noeuds. Selon cette troisième combinaison longitudinale, on commande l'aéronef à l'aide du pas collectif des premières pales des hélices et en modifiant l'assiette longitudinale de l'aéronef.

Selon une réalisation, lorsque l'ordre est un ordre de déplacement selon une direction verticale parallèle à la direction de la pesanteur, on traduit cet ordre de déplacement selon une direction en élévation en une consigne d'accélération verticale, puis on transforme cette consigne d'accélération verticale par des lois de contrôle vertical prédéterminées en une consigne de tenue d'assiette longitudinale transmise à un premier système automatique de tenue d'assiette longitudinale, en une première consigne de tenue de facteur de charge longitudinal transmise à un deuxième système automatique de tenue de facteur de charge contrôlant un pas collectif des premières pales, et en une deuxième consigne de tenue de facteur de charge vertical transmise à un troisième système automatique de tenue de facteur de charge contrôlant une variation du pas collectif des deuxièmes pales de la voilure tournante.

Lors des phases d'équilibre, ou suite à une consigne d'accélération verticale par exemple, cette architecture de commande permet de conserver à la fois une vitesse longitudinale et une vitesse verticale constantes. La phase de montée (ou de descente) s'effectue alors en gardant une incidence aérodynamique constante de l'aéronef. S'il le désire, le pilote peut toujours piloter l'aéronef avec une commande de vol cyclique des deuxièmes pales pour changer ou ajuster son assiette, les lois de contrôle maintenant toujours les mêmes vitesses longitudinale et verticale de la machine.

La consigne de tenue d'assiette longitudinale peut alors être déterminée par la première loi de contrôle vertical suivante :

EP 3 252 560 B1

$$\theta^* = \int q^* dt$$

avec :

$$q^* = (g/u) \cdot [-a'' \cdot (Nz^* + \cos\theta \cdot \cos\varphi) - k''] / (a''+b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $\theta^*$ » représente la consigne de tenue d'assiette longitudinale exprimée en radians, « $\Gamma z^*$ » représente la consigne d'accélération verticale demandée par le pilote, « g » représente l'accélération de la pesanteur, « u » représente la vitesse longitudinale courante de l'aéronef exprimée en mètre par seconde (m/s), « $\theta$ » représente l'assiette longitudinale courante exprimée en radians, « $\varphi$ » représente l'angle de roulis courant de l'aéronef exprimée en radians, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale $\theta^*$ étant gelée lorsque la consigne d'accélération verticale est égale à 1.

Selon un autre aspect, la première consigne de tenue de facteur de charge peut être déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « $Nx^*$ » représente la première consigne de tenue de facteur de charge exprimée en nombre de « g », « $\Gamma z^*$ » représente la consigne d'accélération verticale demandée par le pilote, « g » représente l'accélération de la pesanteur, « • » représente le signe de la multiplication, « / » représente le signe de la division, « $\theta$ » représente l'assiette longitudinale courante exprimée en radians, « $\varphi$ » représente l'angle de roulis courant de l'aéronef exprimée en radians, « a' » représente une première constante verticale, « b' » représente une deuxième constante verticale, « k' » représente une troisième constante verticale, en l'absence dudit ordre de déplacement selon une direction verticale, ladite première consigne $Nx^*$ étant égale au sinus de l'assiette longitudinale courante $\theta$.

De plus, la deuxième consigne de tenue de facteur de charge peut être déterminée par la troisième loi de contrôle vertical suivante :

$$NZcoll^* = (b'' \cdot (Nz^* + \cos\theta \cdot \cos\varphi) - k'') / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $NZcoll^*$ » représente la deuxième consigne de tenue de facteur de charge exprimée en nombre de « g », « $\Gamma z^*$ » représente la consigne d'accélération verticale, « g » représente l'accélération de la pesanteur , « $\theta$ » représente l'assiette longitudinale courante exprimée en radians, « $\varphi$ » représente l'angle de roulis courant de l'aéronef exprimée en radians, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale.

Eventuellement, les constantes verticales sont choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième

5

constante verticale vaut « 1 », et la sixième constante verticale vaut zéro,

- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,

- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,

- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,

- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,

- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,

- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

Ainsi, la première combinaison verticale permet de commander l'aéronef en pilotant le pas collectif des deuxièmes pales de la voilure tournante, sans changer l'assiette longitudinale de cet aéronef.

La deuxième combinaison verticale permet de commander l'aéronef en pilotant le pas collectif des deuxièmes pales de la voilure tournante, avec une assiette longitudinale à cabrer.

La troisième combinaison verticale permet de commander l'aéronef en pilotant le pas collectif des deuxièmes pales de la voilure tournante, avec une assiette longitudinale à piquer.

La quatrième combinaison verticale permet de commander l'aéronef en pilotant le pas collectif des premières pales des hélices pour accélérer, avec une l'assiette longitudinale à cabrer.

La cinquième combinaison verticale permet de commander l'aéronef en pilotant le pas collectif des premières pales des hélices pour accélérer, avec une l'assiette longitudinale à piquer.

La sixième combinaison verticale permet de commander l'aéronef en pilotant le pas collectif des premières pales des hélices pour décélérer, avec une l'assiette longitudinale à cabrer.

La septième combinaison verticale permet de commander l'aéronef en pilotant le pas collectif des premières pales des hélices pour décélérer, avec une l'assiette longitudinale à piquer.

On comprend que les valeurs des diverses constantes peuvent être ajustées sans sortir du cadre de l'invention.

Un moyen de sélection peut être implémenté pour permettre au pilote de choisir la combinaison souhaitée.

Dans un mode de réalisation préféré, une sélection automatique de ces divers modes de fonctionnement est réalisée pour ajuster les constantes présentes dans lesdites lois prédéterminées en fonction du cas de vol. On peut citer principalement comme paramètres définissant les cas de vol : la vitesse horizontale courante, la vitesse verticale courante, l'altitude courante, la puissance courante, la puissance disponible, l'assiette maximale admissible.

Outre un procédé, l'invention a aussi pour objet un dispositif pour appliquer ce procédé.

L'invention vise ainsi un dispositif de pilotage assisté d'un aéronef muni d'une voilure tournante et d'un groupe propulsif comprenant au moins une hélice propulsive, chaque hélice comprenant une pluralité de premières pales, la voilure tournante comprenant au moins un rotor muni d'une pluralité de deuxièmes pales.

Ce dispositif comporte au moins un moyen de commande pouvant être commandé par un pilote pour fournir un ordre de déplacement selon une direction, ledit dispositif ayant une unité de traitement reliée au moyen de commande, l'unité de traitement exécutant des instructions pour transformer ledit ordre en une consigne d'accélération selon ladite direction, puis pour transformer cette consigne d'accélération par des lois prédéterminées en au moins une consigne de tenue d'assiette longitudinale transmise à un premier système automatique de tenue d'assiette longitudinale contrôlant un pas cyclique longitudinal des deuxièmes pales de la voilure tournante et une première consigne de tenue de facteur de charge dans une direction longitudinale de l'aéronef parallèle à un axe de roulis dudit aéronef transmise à un deuxième système automatique de tenue de facteur de charge contrôlant le pas collectif des premières pales du groupe propulsif.

Par ailleurs, le dispositif peut notamment comporter une ou plusieurs des caractéristiques qui suivent.

Ce dispositif peut ainsi comporter un troisième système automatique de tenue de facteur de charge pour contrôler le pas collectif desdites deuxièmes pales, ladite unité de traitement transmettant une deuxième consigne de tenue de facteur de charge au troisième système automatique de tenue de facteur de charge.

En outre, le dispositif peut comporter un système de détermination de paramètres de vol.

Par exemple, un tel système de détermination de paramètres de vol est du type connu sous l'acronyme ADAHRS, « Air Data Attitude and Heading Reference System » en langue anglaise.

Le système de détermination de paramètres de vol peut par exemple déterminer les paramètres de vol courants de l'aéronef en temps réel, tels que la vitesse longitudinale courante, la vitesse de dérapage courante, la vitesse verticale courante, l'assiette longitudinale courante soit l'angle de tangage de l'aéronef, l'assiette transversale courante soit l'angle de roulis de l'aéronef, l'angle de lacet courant, le facteur de charge longitudinal courant, le facteur de charge de dérapage courant, le facteur de charge en élévation courant.

Le système de détermination de paramètres de vol peut alors fournir la valeur de courante de paramètres de vol exploités dans les lois prédéterminées permettant de transformer la consigne d'accélération établie.

On note que le système de détermination de paramètres de vol peut aussi inclure des moyens pour déterminer d'autres paramètres, tels que la vitesse air indiquée, l'altitude, la puissance consommée, la puissance disponible notamment pour ajuster les constantes présentes dans lesdites lois prédéterminées, pour permettre l'élection automatique d'une combinaison de constantes par exemple.

Le dispositif peut aussi comprendre un moyen de sélection du type décrit précédemment.

Enfin, l'invention vise aussi un aéronef hybride muni d'une voilure tournante comprenant au moins un rotor et un groupe propulsif comprenant au moins une hélice, cet aéronef étant pourvu d'un dispositif selon l'invention.

L'invention et ses avantages apparaîtront avec plus de détails dans le cadre de la description qui suit avec des exemples de réalisation donnés à titre illustratif en référence aux figures annexées qui représentent :

- la figure 1, un schéma présentant un aéronef selon l'invention,

- la figure 2, un schéma explicitant le procédé selon l'invention.

Les éléments présents dans plusieurs figures distinctes sont affectés d'une seule et même référence.

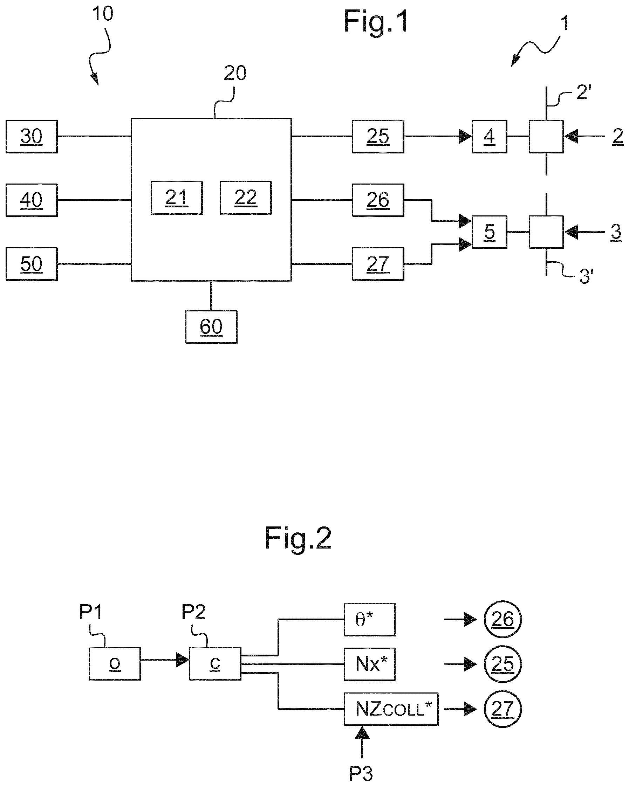

La figure 1 présente un aéronef 1 hybride représenté de manière schématique pour ne pas alourdir inutilement cette figure 1.

L'aéronef 1 comporte un groupe propulsif muni d'au moins une hélice 2 propulsive comprenant une pluralité de premières pales 2', ainsi qu'une voilure tournante comprenant au moins un rotor 3 comprenant une pluralité de deuxièmes pales 3'.

Dès lors, l'aéronef est pourvu d'un premier moyen de réglage 4 du pas des premières pales 2', ce premier moyen de réglage 4 pouvant être un vérin hydraulique apte à modifier le pas collectif des premières pales.

De même, l'aéronef est pourvu d'un deuxième moyen de réglage 5 du pas des deuxièmes pales 3', ce deuxième moyen de réglage 5 pouvant comprendre au moins trois servocommandes pour modifier le pas collectif et le pas cyclique des deuxièmes pales.

En effet, si les servocommandes s'étendent ou se rétractent de la même quantité, le pas collectif des deuxièmes pales 3' est modifié de façon identique. Par contre, si une servocommande se comporte différemment des autres, le pas cyclique des deuxièmes pales 3' est modifié de façon adaptée. On se référera à la littérature si nécessaire pour obtenir des compléments d'informations relatives au pas collectif et au pas cyclique d'un rotor.

L'aéronef 1 est pourvu d'un dispositif 10 de pilotage assisté pour diminuer la charge de travail d'un pilote.

Ce dispositif 10 inclut une unité de traitement 20 reliée à au moins un moyen de commande 30, 40, le pilote manoeuvrant ce moyen de commande pour donner un ordre déplacement O selon une direction.

Par exemple, le dispositif comprend un moyen de commande longitudinale 30 pour requérir un ordre de déplacement O selon une direction longitudinale de l'aéronef à savoir une direction parallèle à l'axe de roulis de l'aéronef, et un moyen de commande verticale 40 pour requérir un ordre de déplacement O selon une direction verticale à savoir parallèlement à la direction de la pesanteur.

Avantageusement, le moyen de commande longitudinal est situé sur la poignée de commande de pas cyclique des deuxièmes pales et le moyen de commande vertical est situé sur la poignée de commande de pas collectif des deuxièmes pales.

L'unité de traitement 20 peut comprendre un organe de calcul 21 et une mémoire 22, l'organe de calcul exécutant des instructions mémorisées dans la mémoire 22 pour appliquer le procédé selon l'invention de manière à fournir des instructions à un premier système automatique de tenue d'assiette longitudinale 26 relié au deuxième moyen de réglage 5 pour contrôler le pas cyclique longitudinale des deuxièmes pales 3', à un deuxième système automatique 25 de tenue de facteur de charge relié au premier moyen de réglage 4 pour contrôler le pas collectif des premières pales 2' et à un troisième système automatique 27 de tenue de facteur de charge relié au deuxième moyen de réglage 5 pour contrôler le pas collectif des deuxièmes pales 3'. Par suite, l'unité de traitement 20 peut être reliée à un système 50 de détermination de paramètres de vol, par exemple du type connu sous l'acronyme ADAHRS, et à un moyen de sélection 60.

La figure 2 explicite le procédé selon l'invention mis en oeuvre par le dispositif 10.

Selon ce procédé, durant une première étape P1, on traduit un ordre $\underline{O}$ de déplacement selon une direction particulière en une consigne d'accélération $\underline{C}$ selon cette direction particulière.

Par exemple, les moyens de commande peuvent être du type commande impulsionnelle à trois états -, 0, + visant à réduire ou à augmenter un paramètre.

En l'occurrence, lorsqu'un pilote manoeuvre un moyen de commande, l'unité de traitement en déduit que le pilote requiert une augmentation ou une diminution de l'accélération de l'aéronef selon la direction associée au moyen de commande et par suite en déduit une consigne d'accélération $\underline{C}$.

Par exemple, l'unité de traitement 20 intègre le signal provenant du moyen de commande pour en déduire la consigne d'accélération $\underline{C}$.

Dès lors, durant une deuxième étape P2, l'unité de traitement transforme cette consigne d'accélération $\underline{C}$ par des lois prédéterminées en au moins une consigne de tenue d'assiette longitudinale θ* transmise à un premier système automatique de tenue d'assiette longitudinale 26 contrôlant le pas cyclique longitudinal de la voilure tournante pour respecter ladite consigne de tenue d'assiette longitudinale et en une première consigne de tenue de facteur de charge Nx* dans une direction longitudinale de l'aéronef parallèle à un axe de roulis dudit aéronef transmise à un deuxième système automatique 25 de tenue dudit facteur de charge contrôlant le pas collectif des premières pales 2' du groupe propulsif pour respecter ladite première consigne Nx*.

Selon une première réalisation, le pilote manoeuvre le premier moyen de commande longitudinale 30 pour requérir un ordre $\underline{O}$ de déplacement selon une direction longitudinale de l'aéronef.

L'unité de traitement 20 détermine l'ordre $\underline{O}$ de déplacement selon une direction longitudinale en une consigne

$$\gamma_X * = \frac{1}{g} \int O.dt$$

d'accélération longitudinale $\gamma_x$* avec la relation suivante :          remise à zéro en l'absence d'ordre $\underline{O}$ puis écrêtée en amplitude et vitesse de variation et où g représente l'accélération de la pesanteur.

L'unité de traitement 20 transforme alors cette consigne d'accélération longitudinale $\gamma_x$* par des lois prédéterminées en une consigne de tenue d'assiette longitudinale θ* transmise au premier système automatique de tenue d'assiette longitudinale 26 et en une première consigne Nx* de tenue de facteur de charge transmise au deuxième système automatique 25 de tenue de facteur de charge contrôlant un pas collectif des premières pales par une régulation de type proportionnelle intégrale dérivée.

Cette consigne de tenue d'assiette longitudinale θ* peut être déterminée par la première loi de contrôle longitudinal suivante :

$$\theta^* = (180/Pi) \bullet [(-a) \bullet (\gamma_x * /g) - k]/(a+b)$$

où « θ* » représente la consigne de tenue d'assiette longitudinale exprimée en degrés, « Pi » représente le nombre $\pi$, « $\gamma_x$* » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On comprend que « θ* » est exprimé en degrés. Pour une représentation de cette consigne de tenue d'assiette longitudinale en radians, le terme 180/Pi doit être supprimé.

Par ailleurs, la première consigne de tenue de facteur de charge Nx* peut être déterminée par la deuxième loi de contrôle longitudinal suivante :

$$Nx^* = [b \bullet (\gamma_x * /g) - k]/(a+b)$$

où « Nx* » représente ladite première consigne de tenue de facteur de charge, « $\gamma_x$* » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On note que la consigne de tenue d'assiette longitudinale θ* peut être modifiée par incrémentation ou décrémentation à l'aide d'un organe de réglage d'assiette lorsque la consigne d'accélération est nulle.

Par exemple, un premier moyen de commande dénommé « beep d'accélération longitudinal » par commodité permet de déterminer la consigne d'accélération longitudinale.

Dès lors, un organe de commande dénommé « beep de référence d'assiette » par commodité peut être utilisé pour modifier uniquement la consigne de tenue d'assiette longitudinale $\theta^*$ à tenir par le premier système automatique lorsque la consigne d'accélération est nulle.

La troisième constante longitudinale k est égale à zéro pour annuler la première consigne Nx* de tenue de facteur de charge lorsque le pilote ne donne pas un ordre de déplacement selon ladite direction longitudinale, ladite consigne d'accélération longitudinale étant nulle.

Selon une variante, lorsque le pilote ne donne pas un ordre de déplacement selon la direction longitudinale, la première consigne Nx* de facteur de charge est égale au sinus de l'assiette longitudinale courante $\theta$, la consigne d'accélération longitudinale $\gamma_x^*$ étant nulle. Dans ce même mode, il est aisé de rajouter une deuxième boucle de régulation sur le pas collectif des premières pales avec le paramètre de vitesse air indiquée IAS pour davantage de robustesse.

Selon une variante, il est avantageux d'utiliser la troisième constante longitudinale « k » comme une consigne d'assiette d'équilibre « idéale » afin de faciliter le pilotage de l'aéronef.

On estime une assiette d'équilibre $\theta_{equi}$ dépendant des principales conditions de vol, cette assiette d'équilibre $\theta_{equi}$ optimisant les performances de l'aéronef dans des phases de vol stabilisée, à savoir lorsque la consigne d'accélération longitudinale est nulle.

Ainsi, l'assiette d'équilibre $\theta_{equi}$ est estimée en fonction de conditions de vol déterminées par exemple à l'aide de la vitesse air indiquée IAS, de l'altitude de l'aéronef, de la puissance consommée par l'aéronef, de la puissance disponible sur l'installation motrice de l'aéronef et de la vitesse verticale de l'aéronef.

La troisième constante longitudinale « k » est alors déterminée à l'aide la formule suivante : $k = -\sin(\theta_{equi}) \cdot (a+b)$.

Ainsi, en phase stabilisée l'assiette à l'équilibre est automatiquement gérée et prise comme référence par la stabilisation de base du pilote automatique. Dans cette même phase, la consigne de tenue de facteur de charge Nx* correspond à « $\sin(\theta_{equi})$ » ce qui permet de conserver la vitesse de l'appareil lors de la rejointe du point d'équilibre.

Par ailleurs, les constantes longitudinales a, b, k sont choisies dans une liste incluant au moins une des combinaisons suivantes :

- une première combinaison longitudinale selon laquelle la première constante longitudinale vaut « 1 », la deuxième constante longitudinale vaut zéro, et la troisième constante longitudinale vaut zéro,

- une deuxième combinaison longitudinale selon laquelle la première constante longitudinale vaut « 0,001 », la deuxième constante longitudinale vaut « 1 », et la troisième constante longitudinale vaut zéro,

- une troisième combinaison longitudinale selon laquelle la première constante longitudinale vaut « 0,9 », la deuxième constante longitudinale vaut « 2 », et la troisième constante longitudinale vaut zéro.

Selon une réalisation, le pilote manoeuvre le deuxième moyen de commande 40 dénommé « beep d'accélération vertical » par commodité pour requérir un ordre $\underline{O}$, cet ordre $\underline{O}$ étant un ordre de déplacement selon une direction verticale parallèle à la direction de la pesanteur.

Selon une version, un pilote peut éventuellement choisir une combinaison longitudinale en manoeuvrant un bouton de sélection. De manière alternative, l'unité de traitement peut déterminer la combinaison longitudinale à appliquer en fonction de la vitesse longitudinale de l'aéronef, déterminée à l'aide du système 50.

L'unité de traitement 20 traduit cet ordre $\underline{O}$ de déplacement selon une direction en élévation en une consigne

$$\Gamma z^* = \frac{1}{g} \int O.dt$$

d'accélération verticale $\Gamma z^*$ avec la relation suivante : remise à zéro en l'absence d'ordre pilote puis écrêtée en amplitude et en vitesse de variation et où g représente l'accélération de la pesanteur.

L'unité de traitement 20 transforme alors cette consigne d'accélération verticale $\Gamma z^*$ en une consigne de tenue d'assiette longitudinale $\theta^*$ transmise à un premier système automatique de tenue d'assiette longitudinale 26, en une première consigne Nx* de facteur de charge transmise à un deuxième système automatique 25 de tenue de facteur de charge contrôlant un pas collectif des premières pales par une régulation proportionnelle intégrale dérivée, et en une deuxième consigne NZcoll* de facteur de charge transmise à un troisième système automatique 27 de tenue de facteur de charge contrôlant une variation de pas collectif des deuxièmes pales de la voilure tournante par une régulation proportionnelle intégrale dérivée.

Il est à noter que le premier système automatique de tenue d'assiette longitudinale 26, le deuxième système automatique 25 de tenue de facteur de charge, et le troisième système automatique 27 de tenue de facteur de charge peuvent faire partie d'un même équipement.

Il est encore à noter que la consigne de tenue d'assiette longitudinale est éventuellement déterminée par la première loi de contrôle vertical suivante :

$$\theta^* = \int q^* dt$$

avec

$$q^* = (g/u) \cdot [-a'' \cdot (Nz^* + \cos\theta \cdot \cos\varphi) - k''] / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $\theta^*$ » représente la consigne de tenue d'assiette longitudinale exprimée en radians, « $\Gamma z^*$ » représente la consigne d'accélération verticale, « g » représente l'accélération de la pesanteur, « u » représente la vitesse longitudinale courante de l'aéronef déterminée par le système 50, « $\theta$ » représente l'assiette longitudinale courante déterminée par le système 50, « $\varphi$ » représente l'angle de roulis courant de l'aéronef déterminée par le système 50, « $\cdot$ » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale $\theta^*$ étant gelée et donc maintenue constante lorsque la consigne d'accélération verticale est égale à 1.

En outre, la première consigne de facteur de charge peut être déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « $Nx^*$ » représente la première consigne de tenue de facteur de charge, « $\Gamma z^*$ » représente la consigne d'accélération verticale, « g » représente l'accélération de la pesanteur, « $\cdot$ » représente le signe de la multiplication, « / » représente le signe de la division, « $\theta$ » représente l'assiette longitudinale courante, « $\varphi$ » représente l'angle de roulis courant de l'aéronef, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, en l'absence dudit ordre de déplacement selon une direction verticale, ladite première consigne $Nx^*$ étant égale au sinus de l'assiette longitudinale courante ($\theta$).

Enfin, la deuxième consigne de facteur de charge est éventuellement déterminée par la troisième loi de contrôle vertical suivante :

$$NZcoll^* = (b'' \cdot (Nz^* + \cos\theta \cdot \cos\varphi) - k'') / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $NZcoll^*$ » représente la deuxième consigne de tenue de facteur de charge, « $\Gamma z^*$ » représente la consigne d'accélération verticale, « g » représente l'accélération de la pesanteur, , « $\theta$ » représente l'assiette longitudinale courante, « $\varphi$ » représente l'angle de roulis courant de l'aéronef, « $\cdot$ » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale

En outre, les constantes verticales peuvent être choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,

- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,

- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,

- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,

- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,

- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,

- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

Un pilote peut éventuellement choisir une combinaison verticale en manoeuvrant un moyen de sélection 60.

## Revendications

1. Procédé de pilotage assisté d'un aéronef (1) muni d'une voilure tournante et d'un groupe propulsif comprenant au moins une hélice (2) propulsive, chaque hélice (2) comprenant une pluralité de premières pales (2'), la voilure tournante comprenant au moins un rotor (3) muni d'une pluralité de deuxièmes pales (3'),
dans ledit procédé on traduit un ordre (O) d'un pilote de l'aéronef donné pour requérir un déplacement selon une direction longitudinale ou verticale en une consigne d'accélération (C) selon ladite direction, puis on transforme cette consigne d'accélération (C) par des lois prédéterminées en au moins une consigne de tenue d'assiette longitudinale (θ*) transmise à un premier système automatique de tenue d'assiette longitudinale (26) contrôlant un pas cyclique longitudinal des deuxièmes pales de la voilure tournante pour respecter ladite consigne de tenue d'assiette longitudinale (θ*) et en une première consigne de tenue de facteur de charge (Nx*) dans une direction longitudinale de l'aéronef parallèle à un axe de roulis dudit aéronef transmise à un deuxième système automatique (25) de tenue dudit facteur de charge contrôlant un pas collectif des premières pales (2') du groupe propulsif pour respecter ladite première consigne (Nx*),
dans ledit procédé, lorsque ledit ordre (O) est un ordre de déplacement selon une direction longitudinale de l'aéronef parallèle à un axe de roulis dudit aéronef, on traduit cet ordre de déplacement selon une direction longitudinale en une consigne d'accélération longitudinale, puis on transforme cette consigne d'accélération longitudinale par des lois prédéterminés uniquement en une consigne de tenue d'assiette longitudinale (θ*) transmise à un premier système automatique de tenue d'assiette longitudinale (26) et en une première consigne (Nx*) de tenue de facteur de charge,
ledit procédé étant **caractérisé en ce que** ladite première consigne de tenue de facteur de charge (Nx*) est déterminée par la deuxième loi de contrôle longitudinal suivante :

$$Nx^* = [b \cdot (\gamma_x^*/g) - k]/(a+b)$$

où « $Nx^*$ » représente ladite première consigne de tenue de facteur de charge, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale ajustable en vol, « b » représente une deuxième constante longitudinale ajustable en vol, « k » représente une troisième constante longitudinale ajustable en vol,
et **en ce que** la troisième constante longitudinale (k) est égale à zéro pour annuler ladite première consigne ($Nx^*$) de tenue de facteur de charge lorsque le pilote ne donne pas un ordre de déplacement selon une direction longitudinale, la consigne d'accélération longitudinale étant nulle lors des manoeuvres à cabrer, ou lors des changements de références d'assiettes longitudinales par l'organe de réglage d'assiette, le deuxième système automatique de tenue du facteur de charge agissant sur une chaîne de commande pour abaisser le pas collectif des premières pales, et / ou, lors des manoeuvres à piquer, le deuxième système automatique de tenue du facteur de charge agissant sur une chaîne de commande pour augmenter le pas collectif des premières pales.

2. Procédé selon la revendication 1,
**caractérisé en ce que** ladite consigne de tenue d'assiette longitudinale ($\theta^*$) est déterminée par la première loi de contrôle longitudinal suivante :

$$\theta^* = (180/Pi) \cdot [(-a) \cdot (\gamma_x^*/g) - k]/(a+b)$$

où « $\theta^*$ » représente la consigne de tenue d'assiette longitudinale exprimée en degrés, « Pi » représente le nombre $\pi$, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

3. Procédé selon l'une quelconque des revendications 1 à 2,
**caractérisé en ce que** la consigne de tenue d'assiette longitudinale ($\theta^*$) est modifiée par incrémentation ou décrémentation par un organe de réglage d'assiette lorsque la consigne d'accélération est nulle.

4. Procédé selon l'une quelconque des revendications 1 à 3,
**caractérisé en ce que** ladite première constante longitudinale et ladite deuxième constante longitudinale sont ajustable en fonction de la vitesse longitudinale de l'aéronef.

5. Procédé selon l'une quelconque des revendications 1 à 4,
**caractérisé en ce que** ladite première constante longitudinale et ladite deuxième constante longitudinale sont dans une première combinaison longitudinale à basse vitesse longitudinale, dans une deuxième combinaison longitudinale à haute vitesse longitudinale et dans une troisième combinaison longitudinale entre ladite basse vitesse longitudinale et ladite haute vitesse longitudinale.

6. Procédé selon l'une quelconque des revendications 1 à 5
**caractérisé en ce que**, lorsque ledit ordre (O) est un ordre de déplacement selon une direction verticale parallèle à la direction de la pesanteur, on traduit cet ordre de déplacement selon une direction en élévation en une consigne d'accélération verticale, puis on transforme cette consigne d'accélération verticale en une consigne de tenue d'assiette longitudinale ($\theta^*$) transmise à un premier système automatique de tenue d'assiette longitudinale (26), en une première consigne ($Nx^*$) de facteur de charge transmise à un deuxième système automatique (26) de tenue de facteur de charge, et en une deuxième consigne ($NZcoll^*$) de facteur de charge transmise à un troisième système automatique (27) de tenue de facteur de charge contrôlant une variation du pas collectif des deuxièmes pales de la voilure tournante.

7. Procédé selon la revendication 6,
**caractérisé en ce que** ladite consigne de tenue d'assiette longitudinale est déterminée par la première loi de contrôle vertical suivante :

$$\theta^* = \int q^* dt$$

avec

$$q^* = (g/u) \cdot [-a'' \cdot (Nz^* + \cos\theta \cdot \cos\varphi) - k''] / (a''+b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « θ* » représente la consigne de tenue d'assiette longitudinale exprimée en radians, « Γz* » représente la consigne d'accélération verticale, « g » représente l'accélération de la pesanteur, « u » représente la vitesse longitudinale courante de l'aéronef, « θ » représente l'assiette longitudinale courante, « φ » représente l'angle de roulis courant de l'aéronef, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale θ* étant gelée lorsque la consigne d'accélération verticale est égale à 1.

8. Procédé selon l'une quelconque des revendications 6 à 7,
**caractérisé en ce que** ladite première consigne de facteur de charge est déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « Nx* » représente la première consigne de tenue de facteur de charge, « Γz* » représente la consigne d'accélération verticale , « g » représente l'accélération de la pesanteur, « • » représente le signe de la multiplication, « / » représente le signe de la division, « θ » représente l'assiette longitudinale courante, « φ » représente l'angle de roulis courant de l'aéronef, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, en l'absence dudit ordre de déplacement selon une direction verticale, ladite première consigne Nx* étant égale au sinus de l'assiette longitudinale courante (θ).

9. Procédé selon l'une quelconque des revendications 6 à 8,
**caractérisé en ce que** ladite deuxième consigne de facteur de charge est déterminée par la troisième loi de contrôle vertical suivante :

$$NZcoll^* = ( b'' \cdot (Nz^* + \cos\theta \cdot \cos\varphi) - k'') / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « NZcoll* » représente la deuxième consigne de tenue de facteur de charge, « Γz* » représente la consigne d'accélération verticale, « g » représente l'accélération de la pesanteur, , « θ » représente l'assiette longitudinale courante, « φ » représente l'angle de roulis courant de l'aéronef, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale

10. Procédé selon l'une quelconque des revendications 6 à 9,

**caractérisé en ce que** lesdites constantes verticales sont choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,
- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,
- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,
- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,
- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,
- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,
- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

11. Dispositif (10) de pilotage assisté d'un aéronef muni d'une voilure tournante et d'un groupe propulsif comprenant au moins une hélice (2) propulsive, chaque hélice comprenant une pluralité de premières pales (2'), la voilure tournante comprenant au moins un rotor (3) muni d'une pluralité de deuxièmes pales (3').
**caractérisé en ce qu'**il comporte au moins un moyen de commande (30, 40) pouvant être commandé par un pilote pour fournir un ordre de déplacement (O) selon une direction longitudinale ou verticale, ledit dispositif (10) ayant une unité de traitement (20) reliée au moyen de commande (30, 40), l'unité de traitement (20) exécutant des instructions pour transformer ledit ordre (O) en une consigne d'accélération (C) selon ladite direction, puis pour transformer cette consigne d'accélération (C) par des lois prédéterminées en au moins une consigne de tenue d'assiette longitudinale ($\theta^*$) transmise à un premier système automatique de tenue d'assiette longitudinale (26) contrôlant un pas cyclique longitudinal des deuxièmes pales (3') de la voilure tournante et une première consigne de tenue de facteur de charge (Nx*) dans une direction longitudinale de l'aéronef parallèle à un axe de roulis dudit aéronef transmise à un deuxième système automatique (25) de tenue de facteur de charge contrôlant le pas collectif des premières pales (2') du groupe propulsif, ledit dispositif appliquant le procédé selon l'une quelconque des revendications 1 à 10.

12. Dispositif selon la revendication 11.
**caractérisé en ce qu'**il comporte un troisième système automatique (27) de tenue de facteur de charge pour contrôler le pas collectif desdites deuxièmes pales (3'), ladite unité de traitement (10) transmettant une deuxième consigne tenue de facteur de charge au troisième système automatique (27) de tenue de facteur de charge.

13. Dispositif selon la revendication 12.
**caractérisé en ce qu'**il comporte un système (50) de détermination de paramètres de vol.

14. Aéronef (1) hybride muni d'une voilure tournante comprenant au moins un rotor (3) et d'un groupe propulsif comprenant au moins une hélice (2),
**caractérisé en ce qu'**il comporte un dispositif (10) selon l'une quelconque des revendications 11 à 13.

**Patentansprüche**

1. Verfahren zum unterstützten Steuern eines Fluggeräts (1), das mit einem Drehflügel und einer Antriebseinheit ausgestattet ist, die mindestens einen Propeller (2) umfasst, wobei jeder Propeller (2) eine Mehrzahl von ersten Blättern (2') umfasst, wobei der Drehflügel mindestens einen Rotor (3) umfasst, der mit einer Mehrzahl von zweiten Blättern (3') ausgestattet ist,

wobei in dem Verfahren ein Befehl (O) eines Piloten des Fluggeräts, der gegeben wird, um eine Bewegung in einer longitudinalen oder vertikalen Richtung anzufordern, in einen Beschleunigungssollwert (C) in dieser Richtung umgewandelt wird, dann dieser Beschleunigungssollwert (C) nach vorgegebenen Regeln in mindestens einen Längsneigungssollwert ($\theta^*$), der an ein erstes automatisches System zum Halten der Längsneigung (26) übertragen wird, das eine zyklische Längssteigung der zweiten Blätter des Drehflügels steuert, um den Längsneigungssollwert ($\theta^*$) einzuhalten, und einen ersten Lastfaktor-Sollwert (Nx*) in einer Längsrichtung des Fluggeräts parallel zu einer Rollachse des Fluggeräts umgewandelt wird, der an ein zweites automatisches System (25) zum Halten des Lastfaktors übertragen wird, der eine kollektive Steigung der ersten Blätter (2') der Antriebseinheit steuert, um den ersten Sollwert (Nx*) einzuhalten,
wobei bei dem Verfahren, wenn der Befehl (O) ein Befehl zum Verlagern in einer Längsrichtung des Fluggeräts parallel zu einer Rollachse des Fluggeräts ist, dieser Befehl zum Verlagern in einer Längsrichtung in einen Längsbeschleunigungssollwert umgewandelt wird, dieser Längsbeschleunigungs-Sollwert dann nach vorgegebenen Regeln in nur einen Längsneigungssollwert ($\theta^*$), der an ein erstes automatisches System zum Halten der Längsneigung (26) übertragen wird, und einen ersten Lastfaktor-Sollwert (Nx*) umgewandelt wird,
wobei das Verfahren **dadurch gekennzeichnet ist, dass** der erste Lastfaktor-Sollwert (Nx*) durch die folgende zweite Längssteuerregel bestimmt wird:

$$Nx^* = [b*(\gamma_x^*/g) - k]/(a+b)$$

wobei "Nx*" den ersten Lastfaktor-Sollwert darstellt, "$\gamma_x^*$" den Längsbeschleunigungssollwert darstellt, "g" die Schwerkraftbeschleunigung darstellt, "*" das Multiplikationszeichen darstellt, "/" das Divisionszeichen darstellt, "a" eine erste Längskonstante darstellt, "b" eine zweite Längskonstante darstellt, "k" eine dritte Längskonstante darstellt,
und dass die dritte Längskonstante (k) gleich Null ist, um den ersten Lastfaktor-Sollwert (Nx*) gleich Null zu machen, wenn der Pilot keinen Befehl zur Verlagerung in Längsrichtung gibt, wobei der Längsbeschleunigungssollwert Null ist bei Steigmanövern oder bei Längsneigungs-Referenzänderungen, wobei das zweite automatische System zum Halten des Lastfaktors auf eine Steuerkette einwirkt, um die kollektive Steigung der ersten Blätter zu vermindern, und/oder bei Sturzflugmanövern, wobei das zweite automatische System zum Halten des Lastfaktors auf eine Steuerkette einwirkt, um die kollektive Steigung der ersten Blätter zu erhöhen.

2. Verfahren nach Anspruch 1, **dadurch gekennzeichnet, dass** der Längsneigungssollwert ($\theta^*$) durch die folgende erste Längssteuerregel bestimmt wird:

$$\theta^* = (180/Pi)*[(-a)*(\gamma_x^*/g) - k]/(a+b),$$

wobei "$\theta^*$" den Längsneigungssollwert in Grad darstellt, "Pi" die Zahl $\pi$ darstellt; 7; "$\gamma_x^*$" den Längsbeschleunigungssollwert darstellt , "g" die Schwerkraftbeschleunigung darstellt , "*" das Multiplikationszeichen darstellt , "/" das Divisionszeichen darstellt , "a" eine erste Längskonstante darstellt , "b" eine zweite Längskonstante darstellt , "k" eine dritte Längskonstante darstellt.

3. Verfahren nach einem der Ansprüche 1 bis 2,
**dadurch gekennzeichnet, dass** der Längsneigungssollwert ($\theta^*$) durch Inkrementieren oder Dekrementieren durch einen Lageregler geändert wird, wenn der Beschleunigungs-Sollwert Null ist.

4. Verfahren nach einem der Ansprüche 1 bis 3, **dadurch gekennzeichnet, dass** die erste Längskonstante und die zweite Längskonstante als Funktion der Längsgeschwindigkeit des Fluggeräts einstellbar sind.

5. Verfahren nach einem der Ansprüche 1 bis 4, **dadurch gekennzeichnet, dass** die erste Längskonstante und die zweite Längskonstante in einer ersten Längskombination bei niedriger Längsgeschwindigkeit, in einer zweiten Längskombination bei hoher Längsgeschwindigkeit und in einer dritten Längskombination zwischen der niedrigen Längsgeschwindigkeit und der hohen Längsgeschwindigkeit vorliegen.

6. Verfahren nach einem der Ansprüche 1 bis 5, **dadurch gekennzeichnet, dass**, wenn der Befehl (O) ein Befehl zum Verlagern in einer vertikalen Richtung parallel zur Schwerkraft ist, dieser Befehl zum Verlagern in einer Elevationsrichtung in einen Sollwert der vertikalen Beschleunigung umgewandelt wird, und dann dieser Sollwert der vertikalen Beschleunigung in einen Längsneigungssollwert ($\theta$*), der an ein erstes automatisches System zum Halten der Längsneigung (26) übertragen wird, in einen ersten Lastfaktor-Sollwert (Nx*), der an ein zweites automatisches System zum Halten des Lastfaktors (26) übertragen wird, und in einen zweiten Lastfaktor-Sollwert (NZcoll*) umgewandelt wird, der an ein drittes automatisches System zum Halten des Lastfaktors (27) übertragen wird, das eine Änderung der kollektiven Steigung der zweiten Blätter des Drehflügels steuert.

7. Verfahren nach Anspruch 6, **dadurch gekennzeichnet, dass** der Längsneigungssollwert durch die folgende erste vertikale Steuerungsregel bestimmt wird:

$$\theta^* = \int q^* dt$$

wobei

$$q^* = (g/u) \cdot [-a'' \cdot (Nz^* + \cos\theta \cdot \cos\varphi) - k''] / (a''+b'')$$

und

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

wobei "$\theta$*" den in Bogenmaß ausgedrückten Längsneigungssollwert darstellt, "$\Gamma$z*" den vertikalen Beschleunigungssollwert darstellt, "g" die Schwerkraftbeschleunigung darstellt, "u" die aktuelle Längsgeschwindigkeit des Fluggeräts darstellt, "$\theta$" die aktuelle Längsneigung darstellt, "$\varphi$" den aktuellen Rollwinkel des Fluggeräts darstellt, "*" das Multiplikationszeichen darstellt, "/" das Divisionszeichen darstellt, "a'" eine erste vertikale Konstante darstellt, "b'" eine zweite vertikale Konstante darstellt, "k'" eine dritte vertikale Konstante darstellt, "a''" eine vierte vertikale Konstante darstellt, "b''" eine fünfte vertikale Konstante darstellt, "k''" eine sechste vertikale Konstante darstellt, wobei der Längslagensollwert $\theta$* eingefroren ist, wenn der vertikale Beschleunigungssollwert 1 ist.

8. Verfahren nach einem der Ansprüche 4 bis 5, **dadurch gekennzeichnet, dass** der erste Lastfaktor-Sollwert durch die folgende zweite vertikale Steuerungsregel bestimmt wird:

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi) \, ,$$

wobei "Nx*" den ersten Lastfaktor-Sollwert darstellt, "$\Gamma$z*" den vertikalen Beschleunigungssollwert darstellt, "g" die Schwerkraftbeschleunigung darstellt, "*" das Multiplikationszeichen darstellt, "/" das Divisionszeichen darstellt, "$\theta$" die aktuelle Längsneigung darstellt, "$\varphi$" den aktuellen Rollwinkel des Fluggeräts darstellt, "a'" eine erste vertikale Konstante darstellt, "b'" eine zweite vertikale Konstante darstellt, "k'" eine dritte vertikale Konstante darstellt, "a''" eine vierte vertikale Konstante darstellt, "b''" eine fünfte vertikale Konstante darstellt, "k''" eine sechste vertikale Konstante darstellt, wobei in Abwesenheit des Befehls zum Verlagern in einer vertikalen Richtung der erste Sollwert "Nx*" gleich dem Sinus der aktuellen Längsneigung ($\theta$) ist.

9. Verfahren nach einem der Ansprüche 6 bis 8, **dadurch gekennzeichnet, dass** der zweite Lastfaktor-Sollwert durch die folgende dritte vertikale Steuerungsregel bestimmt wird:

$$NZcoll^* = ( b'' \cdot (Nz^* + \cos\theta \cdot \cos\varphi) - k'') / (a''+ b'')$$

und

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

wobei "NZcoll*" den zweiten Lastfaktor-Sollwert darstellt, "$\Gamma$z*" den vertikalen Beschleunigungssollwert darstellt, "g" die Schwerkraftbeschleunigung darstellt, "$\theta$" die aktuelle Längsneigung darstellt, "$\varphi$" den aktuellen Rollwinkel des Fluggeräts darstellt, "*" das Multiplikationszeichen darstellt, "/" das Divisionszeichen darstellt, "a'" eine erste vertikale Konstante darstellt, "b'" eine zweite vertikale Konstante darstellt, "k'" eine dritte vertikale Konstante darstellt, "a''" eine vierte vertikale Konstante darstellt, "b''" eine fünfte vertikale Konstante darstellt, "k''" eine sechste vertikale Konstante darstellt.

**10.** Verfahren nach einem der Ansprüche 6 bis 9, **dadurch gekennzeichnet, dass** die vertikalen Konstanten aus einer Liste ausgewählt sind, die mindestens eine der folgenden Kombinationen beinhaltet:

- eine erste vertikale Kombination, nach der die erste vertikale Konstante 1 ist, die zweite vertikale Konstante Null ist, die dritte vertikale Konstante Null ist, die vierte vertikale Konstante Null ist, die vierte vertikale Konstante Null ist, die fünfte vertikale Konstante 1 ist und die sechste vertikale Konstante Null ist,
- eine zweite vertikale Kombination, nach der die erste vertikale Konstante 1 ist, die zweite vertikale Konstante Null ist, die dritte vertikale Konstante Null ist, die vierte vertikale Konstante Null ist, die vierte vertikale Konstante 0,8 ist, die fünfte vertikale Konstante 1 ist und die sechste vertikale Konstante Null ist,
- eine dritte vertikale Kombination, nach der die erste vertikale Konstante 1 ist, die zweite vertikale Konstante Null ist, die dritte vertikale Konstante Null ist, die vierte vertikale Konstante -0,6 ist, die fünfte vertikale Konstante 1 ist und die sechste vertikale Konstante Null ist,
- eine vierte vertikale Kombination, nach der die erste vertikale Konstante 1 ist, die zweite vertikale Konstante 0,15 ist, die dritte vertikale Konstante Null ist, die vierte vertikale Konstante 0,8 ist, die fünfte vertikale Konstante 1 ist und die sechste vertikale Konstante Null ist,
- eine fünfte vertikale Kombination, in der die erste vertikale Konstante 1 ist, die zweite vertikale Konstante 0,15 ist, die dritte vertikale Konstante Null ist, die vierte vertikale Konstante -0,6 ist, die fünfte vertikale Konstante 1 ist und die sechste vertikale Konstante Null ist,
- eine sechste vertikale Kombination, in der die erste vertikale Konstante 1 ist, die zweite vertikale Konstante -0,15 ist, die dritte vertikale Konstante Null ist, die vierte vertikale Konstante 0,8 ist, die fünfte vertikale Konstante 1 ist und die sechste vertikale Konstante Null ist,
- eine siebte vertikale Kombination, in der die erste vertikale Konstante 1 ist, die zweite vertikale Konstante -0,15 ist, die dritte vertikale Konstante Null ist, die vierte vertikale Konstante -0,6 ist, die fünfte vertikale Konstante 1 ist und die sechste vertikale Konstante Null ist.

**11.** Vorrichtung (10) zum unterstützten Steuern eines Fluggeräts, das mit einem Drehflügel und einer Antriebseinheit ausgestattet ist, die mindestens einen Propeller (2) umfasst, wobei jeder Propeller (2) eine Mehrzahl von ersten Blättern (2') umfasst, wobei der Drehflügel mindestens einen Rotor (3) umfasst, der mit einer Mehrzahl von zweiten Blättern (3') ausgestattet ist,

**dadurch gekennzeichnet, dass** sie wenigstens eine Steuereinrichtung (30, 40) umfasst, die von einem Piloten gesteuert werden kann, um einen Befehl (O) für eine Bewegung in einer longitudinalen oder vertikalen Richtung zu geben,
dass die Vorrichtung (10) eine Verarbeitungseinheit (20) aufweist, die mit der Steuereinrichtung (30, 40) verbunden ist, wobei die Verarbeitungseinheit (20) Anweisungen ausführt, um den Befehl (O) in einen Beschleunigungssollwert (C) in dieser Richtung umzuwandeln, dann diesen Beschleunigungssollwert (C) nach vorgegebenen Regeln in mindestens einen Längsneigungssollwert ($\theta^*$), der an ein erstes automatisches System zum Halten der Längsneigung (26) übertragen wird, das eine zyklische Längssteigung der zweiten Blätter des Drehflügels steuert, und einen ersten Lastfaktor-Sollwert (Nx*) in einer Längsrichtung des Fluggeräts parallel zu einer Rollachse des Fluggeräts umzuwandeln, der an ein zweites automatisches System (25) zum Halten des Lastfaktors übertragen wird, der eine kollektive Steigung der ersten Blätter (2') der Antriebseinheit steuert, wobei die Vorrichtung das Verfahren nach einem der Ansprüche 1 bis 10 ausführt.

**12.** Vorrichtung nach Anspruch 11, **dadurch gekennzeichnet, dass** sie ein drittes automatisches System (27) zum Halten des Lastfaktors zum Steuern der kollektiven Steigung der zweiten Blätter (3') umfasst, wobei die Verarbeitungseinheit (10) einen zweiten Lastfaktor-Sollwert an das dritte automatische System (27) zum Halten des Lastfaktors übermittelt.

**13.** Vorrichtung nach Anspruch 12, **dadurch gekennzeichnet, dass** sie ein System (50) zum Bestimmen von Flugparametern beinhaltet.

**14.** Hybrides Fluggerät (1), das mit einem Drehflügel, der mindestens einen Rotor (3) umfasst, und mit einer Antriebseinheit, die mindestens einen Propeller (2) umfasst, ausgestattet ist, **dadurch gekennzeichnet, dass** es eine Vorrichtung (10) nach einem der Ansprüche 11 bis 13 umfasst.

**Claims**

1. Method of assisted piloting for an aircraft (1) having a rotary wing and a propulsion unit including at least one propulsion propeller (2), each propeller (2) having a plurality of first blades (2'), and the rotary wing including a rotor (3) provided with a plurality of second blades (3'),
   in said method, an order (O) from a pilot of the given aircraft to require movement in a longitudinal or vertical direction is translated into an acceleration setpoint (C) in said direction, and then this acceleration setpoint (C) is converted by predetermined laws into at least one setpoint of required longitudinal attitude ($\theta^*$) transmitted to a first automatic system of required longitudinal attitude (26) controlling a longitudinal cyclical pitch of the second blades of the rotary wing to respect said setpoint of required longitudinal attitude ($\theta^*$) and into a first setpoint of required load factor (Nx*) in a longitudinal direction of the aircraft parallel to a roll axis of said aircraft transmitted to a second automatic system (25) of requiring said load factor controlling a collective pitch of the first blades (2') of the propulsion unit to respect said first setpoint (Nx*),
   in said method, when said order (O) is an order of movement in a longitudinal direction of the aircraft parallel to a roll axis of said aircraft, this order of movement in a longitudinal direction is translated into a longitudinal acceleration setpoint, and then this acceleration setpoint is converted by predetermined laws uniquely into a setpoint of required longitudinal attitude ($\theta^*$) transmitted to a first automatic system of required longitudinal attitude (26) and into a first setpoint (Nx*) of required load factor,
   said method being **characterised in that** said first setpoint of required load factor (Nx*) is determined by the following second longitudinal control law:

$$Nx^* = [b \bullet (\gamma_x^*/g) - k]/(a+b)$$

   where "Nx*" represents said first setpoint of required load factor, "$\gamma_x^*$" represents the longitudinal acceleration setpoint, "g" represents the acceleration of gravity, "•" represents the multiplication sign, "/" represents the division sign, "a" represents a first longitudinal constant adjustable in flight, "b" represents a second longitudinal constant adjustable in flight, "k" represents a third longitudinal constant adjustable in flight,
   and **in that** the third longitudinal constant (k) is equal to zero to cancel said first setpoint (Nx*) of required load factor when the pilot does not give an order of movement in a longitudinal direction, the longitudinal acceleration setpoint being zero during manoeuvres to nose up, or during changes of references of longitudinal attitude by the attitude setting control, the second automatic system of required load factor acting on a command system to lower the collective pitch of the first blades, and/or, during manoeuvres to dive, the second automatic system of required load factor acting on a command system to increase the collective pitch of the first blades.

2. Method according to claim 1, **characterised in that** said setpoint of required longitudinal attitude ($\theta^*$) is determined by the following first longitudinal control law:

$$\theta^* = (180/Pi) \bullet [(-a) \bullet (\gamma_x^*/g) - k]/(a+b)$$

   where "$\theta^*$" represents the setpoint of required longitudinal acceleration expressed in degrees, "Pi" represents the number $\pi$, "$\gamma_x^*$" represents the longitudinal acceleration setpoint, "g" represents the acceleration of gravity, "•" represents the multiplication sign, "/" represents the division sign, "a" represents a first longitudinal constant, "b" represents a second longitudinal constant, "k" represents a third longitudinal constant.

3. Method according to any one of the claims 1 to 2, **characterised in that** the setpoint of required longitudinal attitude ($\theta^*$) is modified by incrementing or decrementing by a control of attitude adjustment when the acceleration setpoint is zero.

4. Method according to any one of the claims 1 to 3, **characterised in that** said first longitudinal constant and said second longitudinal constant can be adjusted according to the longitudinal speed of the aircraft.

5. Method according to any one of the claims 1 to 4, **characterised in that** said first longitudinal constant and said second longitudinal constant are in a first longitudinal combination at low longitudinal speed, in a second longitudinal combination at high longitudinal speed and in a third longitudinal combination between said low longitudinal speed and said high longitudinal speed.

6. Method according to any one of the claims 1 to 5 **characterised in that**, when said order ($\underline{O}$) is an order of movement in a vertical direction parallel to the direction of gravity, this order of movement in an elevation direction is translated into a vertical acceleration setpoint, and then this vertical acceleration setpoint is converted into a setpoint of required longitudinal attitude ($\theta^*$) transmitted to a first automatic system of required longitudinal attitude (26), into a first setpoint ($Nx^*$) of load factor transmitted to a second automatic system (26) of required load factor, and into a second setpoint ($NZcoll^*$) of load factor transmitted to a third automatic system (27) of required load factor controlling a variation of collective pitch of the second blades of the rotary wing.

7. Method according to claim 6, **characterised in that** said setting of required longitudinal attitude is determined by the following first vertical control law:

$$\theta^* = \int q^* dt$$

with

$$q^* = (g/u) \bullet [-a'' \bullet (Nz^* + \cos\theta \bullet \cos\varphi) - k''] (a'' + b'')$$

and

$$Nz^* = (1/(a' \bullet \cos\theta \bullet \cos\varphi + b' \bullet \sin\theta)) \bullet (-a' \bullet (\Gamma z^*/g + 1) - k' \bullet \sin\theta)$$

where "$\theta^*$" represents the setpoint of required longitudinal attitude expressed in radians, "$\Gamma z^*$" represents the vertical acceleration setpoint, "$g$" represents the acceleration of gravity, "$u$" represents the current longitudinal speed of the aircraft, "$\theta$" represents the current longitudinal attitude, "$\varphi$" represents the current roll angle of the aircraft, "$\bullet$" represents the multiplication sign, "$/$" represents the division sign, "$a'$" represents a first vertical constant, "$b'$" represents a second vertical constant, "$k'$" represents a third vertical constant, "$a''$" represents a fourth vertical constant, "$b''$" represents a fifth vertical constant, "$k''$" represents a sixth vertical constant, the setpoint of required longitudinal attitude $\theta^*$ being frozen when the vertical acceleration setpoint is equal to 1.

8. Method according to any one of the claims 6 to 7, **characterised in that** said first setpoint of required load factor is determined by the following second vertical control law:

$$Nx^* = (1/(a' \bullet \cos\theta \bullet \cos\varphi + b' \bullet \sin\theta) \bullet (b'(\Gamma z^*/g + 1) - k' \bullet \cos\theta \bullet \cos\varphi)$$

where "$Nx^*$" represents the first setpoint of required load factor, "$\Gamma z^*$" represents the vertical acceleration setpoint, "$g$" represents the acceleration of gravity, "$\bullet$" represents the multiplication sign, "$/$" represents the division sign, "$\theta$" represents the current longitudinal attitude, "$\varphi$" represents the current roll angle of the aircraft, "$a'$" represents a first vertical constant, "$b'$" represents a second vertical constant, "$k'$" represents a third vertical constant, "$a''$" represents a fourth vertical constant, "$b''$" represents a fifth vertical constant, "$k''$" represents a sixth vertical constant, in the absence of said order of movement in a vertical direction, said first setpoint "$Nx^*$" being equal to the sinus of the current longitudinal attitude ($\theta$).

9. Method according to any one of the claims 6 to 8, **characterised in that** said second load factor setpoint is determined by the following third vertical control law:

$$NZcoll^* = (b'' \bullet (Nz^* + \cos\theta \bullet \cos\varphi) - k'') / (a'' + b'')$$

and

$$Nz^* = (1/(a'\bullet\cos\theta\bullet\cos\varphi + b'\bullet\sin\theta)) \bullet (-a'\bullet (\Gamma z^*/g + 1) - k'\bullet\sin\theta)$$

where "NZcoll*" represents the second setpoint of required load factor, "$\Gamma z^*$" represents the vertical acceleration setpoint, "g" represents the acceleration of gravity, "$\theta$" represents the current longitudinal attitude, "$\varphi$" represents the current roll angle of the aircraft, "$\bullet$" represents the multiplication sign, "/" represents the division sign, "a'" represents a first vertical constant, "b'" represents a second vertical constant, "k'" represents a third vertical constant, "a''" represents a fourth vertical constant, "b''" represents a fifth vertical constant, "k''" represents a sixth vertical constant.

10. Method according to any one of the claims 6 to 9, **characterised in that** said vertical constants are chosen in a list including at least one of the following combinations:

- a first vertical combination in which the first vertical constant is "1", the second vertical constant is zero, the third vertical constant is zero, the fourth vertical constant is zero, the fifth vertical constant is "1", and the sixth vertical constant is zero,
- a second vertical combination in which the first vertical constant is "1", the second vertical constant is zero, the third vertical constant is zero, the fourth vertical constant is "0.8", the fifth vertical constant is "1", and the sixth vertical constant is zero,
- a third vertical combination in which the first vertical constant is "1", the second vertical constant is zero, the third vertical constant is zero, the fourth vertical constant is "-0.6", the fifth vertical constant is "1", and the sixth vertical constant is zero,
- a fourth vertical combination in which the first vertical constant is "1", the second vertical constant is "0.15", the third vertical constant is zero, the fourth vertical constant is "0.8", the fifth vertical constant is "1", and the sixth vertical constant is zero,
- a fifth vertical combination in which the first vertical constant is "1", the second vertical constant is "0.15", the third vertical constant is zero, the fourth vertical constant is "-0.6", the fifth vertical constant is "1", and the sixth vertical constant is zero,
- a sixth vertical combination in which the first vertical constant is "1", the second vertical constant is "-0.15", the third vertical constant is zero, the fourth vertical constant is "0.8", the fifth vertical constant is "1", and the sixth vertical constant is zero,
- a seventh vertical combination in which the first vertical constant is "1", the second vertical constant is "-0.15", the third vertical constant is zero, the fourth vertical constant is "-0.6", the fifth vertical constant is "1", and the sixth vertical constant is zero,

11. Device (10) of assisted piloting for an aircraft having a rotary wing and a propulsion unit including at least one propulsion propeller (2), each propeller having a plurality of first blades (2'), and the rotary wing including a rotor (3) provided with a plurality of second blades (3'), **characterised in that** it comprises at least one control means (30, 40) capable of being controlled by a pilot to supply an order of movement (O) in a longitudinal or vertical direction, said device (10) having a processing unit (20) connected to the control means (30, 40), the processing unit (20) executing the instructions to convert said order (O) into an acceleration setpoint (C) in said direction, and then to convert this acceleration setpoint (C) by predetermined laws into at least one setpoint of required longitudinal attitude ($\theta^*$) transmitted to a first automatic system of required longitudinal attitude (26) controlling a longitudinal cyclical pitch of the second blades (3') of the rotary wing and a first setpoint of required load factor (Nx*) in a longitudinal direction of the aircraft parallel to a roll axis of said aircraft transmitted to a second automatic system (25) of required load factor controlling the collective pitch of the first blades (2') of the propulsion unit, said device applying the method according to any one of the claims 1 to 10.

12. Device according to claim 11, **characterised in that** it comprises a third automatic system (27) of required load factor for controlling the collective pitch of said second blades (3'), said processing unit (10) transmitting a second required load factor setpoint to the third automatic system (27) of required load factor.

13. Device according to claim 12, **characterised in that** it comprises a system (50) for determining the flight settings.

14. Hybrid aircraft (1) provided with a rotary wing comprising at least one rotor (3) and a propulsion unit comprising at least one propeller (2), **characterised in that** it comprises a device (10) according to any one of the claims 11 to 13.

Fig.1

Fig.2

**EP 3 252 560 B1**

## RÉFÉRENCES CITÉES DANS LA DESCRIPTION

**Documents brevets cités dans la description**

- US 20080237392 A